Europäisches Patentamt

European Patent Office

Office européen des brevets

(11) Publication number: 0 378 365 A2

# (12) EUROPEAN PATENT APPLICATION

(21) Application number: 90300237.6

(22) Date of filing: 09.01.90

(51) Int. Cl.5: B66F 19/00, A01G 23/06

(30) Priority: 12.01.89 GB 8900351
19.09.89 GB 8921184

(43) Date of publication of application:
18.07.90 Bulletin 90/29

(84) Designated Contracting States:
AT BE CH DE DK ES FR GB GR IT LI LU NL SE

(71) Applicant: Carr, Alan Lawrence
74 Birmingham Road
Water Orton Birmingham B46 1TH(GB)

(72) Inventor: Carr, Alan Lawrence
74 Birmingham Road
Water Orton Birmingham B46 1TH(GB)

(74) Representative: Gee, David William
Farmhouse Court
Marston Nr. Sutton Coldfield West Midlands
B76 0DW(GB)

(54) Lifting appliance.

(57) A lifting appliance comprising upwardly extendable jacking means (28), at least three legs (54) adapted to support and position the jacking means substantially above an object (10) to be lifted, attachment means (12) adapted for secure attachment to the object to be lifted, the attachment means being flexible and substantially non-extensible, the attachment means being located to opposed sides of the jacking means and being operatively connectable thereto whereby the attachment means can be tensioned to lift the object upon upward extension of the jacking means. The invention also includes a method of operating and using a lifting appliance according to the invention, particularly to obtain multi-lift of the object to be lifted e.g. a buried tree stump.

FIG 1

## LIFTING APPLIANCE

This invention relates to a lifting appliance, with particular utility for lifting objects up to a weight of 20 tonnes in a confined working space, and to a method of operating and using such a lifting appliance.

The known lifting appliances are heavy, and require substantial working space around and/or above the object to be lifted. Thus the lifting arm of a crane is specially strengthened to operate in cantilever, so adding extra weight; and the lifting arm is operated from one side of the object to be lifted, requiring extra working space both to the side and above the object. A block and tackle is hung from near the mid-point of a raised cross-beam, which is typically supported on legs at its two ends; substantial headroom is required to accommodate the raised cross beam, and the legs are of a length dictated not only by the lifting height but also by the vertical height of the block and tackle, and thus are relatively heavy and cumbersome. Often a block and tackle is worked from the side, requiring a substantial working area with good footing.

I now propose a lifting appliance which avoids or reduces these disadvantages, and a method of using and operating such an appliance.

Thus I propose a lifting appliance comprising upwardly extendable jacking means, at least three legs adapted to support and position the jacking means substantially above an object to be lifted, attachment means adapted for secure attachment to the object to be lifted, the attachment means being flexible and substantially non-extensible, the attachment means being located to opposed sides of the jacking means and being operatively connectable thereto whereby the attachment means can be tensioned to lift the object upon upward extension of the jacking means.

Preferably the jacking means is removably located on a support table, which in turn is mounted on four equi-spaced legs; conveniently the legs are individually adjustable, preferably telescopic, to permit the support table to be substantially horizontal in use. Usefully the attachment means is formed as a sling chain, with chain runs passing through apertures in hollow guide members positioned to either side of the jacking means, and through a hollow jack head mounted on an extension of the jack piston and so movable upwards and downwards with the piston.

A useful application of my lifting appliance is for ripping tree stumps out of the ground, with or without the encasing soil. To further reduce the working space required for such an application I propose a multi-stage lift, using (a) locking means which can hold the attachment means, and thus a partly-lifted object, by way of an end surface e.g. an upper surface, of a (chain-run) guide member and (b) coupling means interconnecting the chain runs to either side of and below the jacking means, to form a closed loop around the jacking means. With the locking means so holding the chain closed loop, the jacking means can be re-set (i.e. with the jack head returned to a lower position); and the coupling means can then be re-positioned, ready for the next lifting stage.

Thus I also propose a method of operating a lifting appliance which includes a locking means for the attachment means, characterised by holding the attachment means whilst the jacking means is re-set, to provide a multi-stage lift for the object to be lifted.

My lifting appliance can be relatively light-weight, and portable and for these purposes is conveniently made of separable parts of a size to fit conveniently in a car boot or equivalent.

The invention is further described by way of example with reference to the accompanying drawings in which:-

Fig.1 is a schematic side view of a lifting appliance according to my invention, in use for lifting a tree stump from the ground;

Fig. 1a is of alternative object grippers;

Fig.2 is a plan view (from above) of the support table;

Fig.3 is a view on the line III-III of Fig.2;

Fig.4 is an underneath view of the support table of Fig.2;

Fig.5 is a perspective view of a chain guide member; and

Fig.6 is a perspective view of a chain locking means.

Fig.7 is a schematic side view of a modified lifting appliance; and

Fig.8 is a scrap view of a grab hook positioned in a chain run.

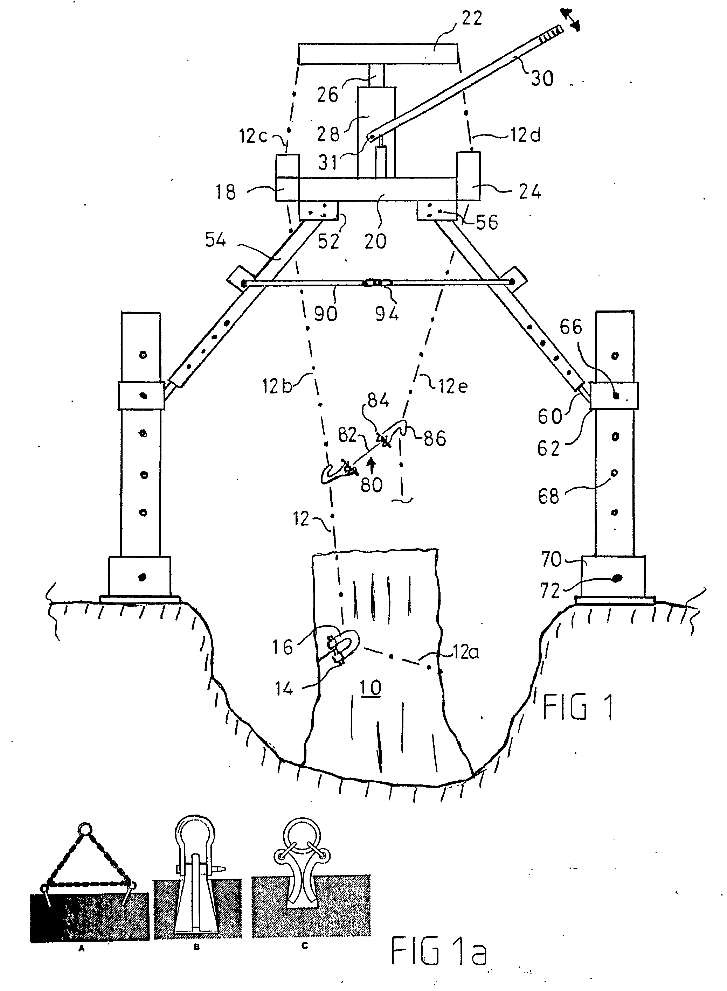

As seen in Fig.1, tree stump 10 is to be lifted, together with its roots and any soil encasing the roots. Thus around the trunk 10 is an attachment means which in this embodiment comprises a sling chain 12, with one end of chain 12 held by removable threaded crosspiece 14 of shackle 16; an intermediate run 12a of the chain 12 passes through the loop of shackle 16, and subsequent runs pass through first hollow guide member 18 mounted on support table 20, through jack head 22, through second hollow guide member 24 mounted on support table 20, and so to a free run section 12e at the end of the chain remote from the shackle and at position below the level of the support table 20.

In an alternative embodiment as seen in Fig. 1a, the object gripping means can be lifting pins (A); three-legged lewis (B); or chain lewis (C), using formed holes e.g. in stones or masonry. The object grippers are attached to chain 12 in known fashion.

Jack head 22 is carried on a piston extension 26 of jacking means 28, the piston extension 26 being movable upwardly (as seen in Fig.1) upon jack handle 30 being "pumped" about pivot 31 in the direction of the arrows. Jacking means 28 includes a valve (not shown) which can be opened to allow re-setting of the piston extension 26 (and thus jack head 22) to its lowermost position.

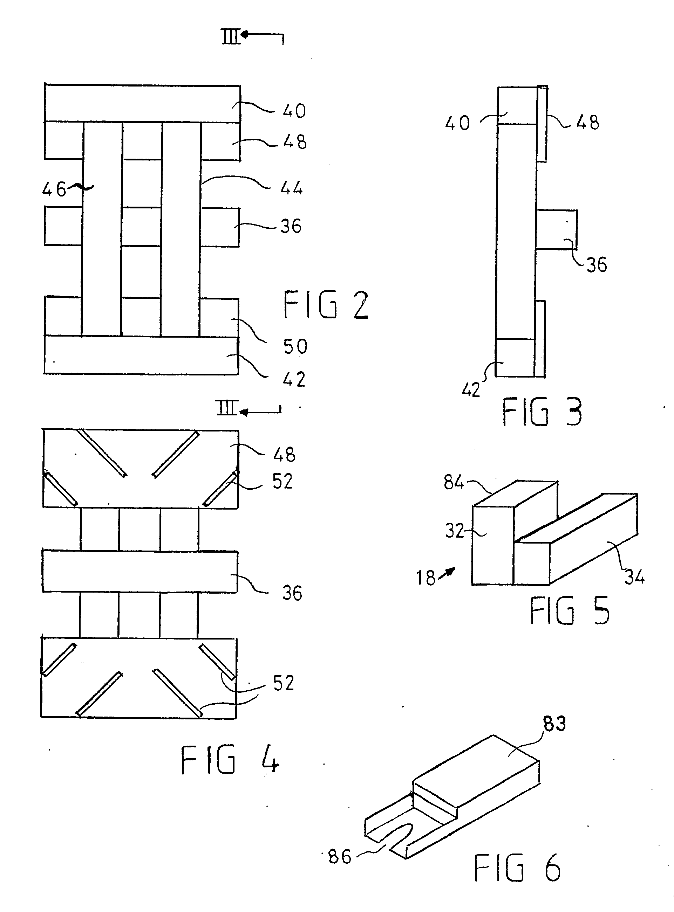

Guide members 18 and 24 are identical, and as more clearly seen in Fig.5 comprise a guide part 32 and a mounting part 34. Mounting part 34 slots inside one end of a retaining tube 36 which is welded to the underside of support table 20 i.e. the tube 34 of guide member 18 closely fits into one end of the retaining tube 36, whilst the corresponding tube of guide member 24 fits into the other end of the retaining tube 36. This arrangement means that the respective guide parts 32 are off-set, with the advantage that the chain runs 12c, 12d are angled in opposite directions, and do not interfere with the pumping movement of handle 30 or the operation of the jack release valve.

As best seen in Figs. 2-4, the support table 20 comprises a pair of end members 40, 42 welded to a pair of struts 44,46. Welded to the underside of members 40, 42 and to the underside of struts 44,46 are respective shelves 48, 50. Retaining tube 36 is welded to the underside of struts 44,46.

To the underside of jacking means 28 is secured as by welding a strut (not seen) of a size and shape to fit closely between struts 44, 46 and to rest on shelves 48, 50; this strut in this embodiment is of the same size and shape as struts 44, 46. By means of this strut the jacking means is located against downward and lateral movement relative to the support table 20.

Welded to the underside of each shelf 48, 50 are two pairs of brackets 52, for mounting each of four respective legs 54. Thus each pair of brackets includes three aligned apertures i.e. an upper, a lower and a forward aperture. In its position of use a leg 54 is pinned by way of an upper and forward aperture; whilst in its position of storage, transport or "as packed", (as more fully described below) a leg is pinned through the upper and lower apertures.

The lower end of each leg 54 is releasably located, as by a so-called "R-Clip", by way of apertures 58 and apertures (not seen) in angled projection 60 of connecting member 62.

Connecting member 62 can be movably positioned up and down the respective one of four guide posts 64; and can be secured in one of a number of discrete positions by way of apertures 66 in the connecting member and apertures 68 in the guide post 64, and held by a releasable clip (not show). Each guide post 64 is mounted on a foot 70, pivoted at 72 to the guide post. Although in this embodiment the legs 54 are connected at the same height to each of the guide posts, in an alternative embodiment useful for unlevel ground, one or more of the legs can be connected at a different height on its respective guide post. In yet a further alternative embodiment, the vertical guide posts can be omitted, and legs 54 are of extended length (perhaps telescopic) and are themselves provided with feet corresponding to pivoted feet 70.

Below support table 20, chain runs 12b and 12e are interconnected by coupling means 80 which in this embodiment comprises a flexible chain 82, with end links through which pass threaded cross pins 84 of hook 86. In this embodiment, each hook 86 fits between two links of respective chain run 12b,12e; but in an alternative embodiment the hook fits into a link.

In use, and with chain run 12a located as shown in Fig.1, jack handle 30 is operated to cause piston extension 26 to rise, and so lift chain runs 12b,12e and thus trunk 10. When piston extension 26 is at or near its fully extended position, locking means 83 (Fig.6) is positioned across upper edges 84 of guide member 18 with slot 86 fitting between two links such that the upper of the two links rests across the slot 86 i.e. transversly to the longitudinal direction of slot 86. In an alternative embodiment the locking means is tubular throughout its length, with aligned slots in its upper and lower faces. The hydraulic pressure in jacking means 28 is then gradually released, so that the weight of trunk 10 is taken by locking means 82 (and upper edge 84). With the locking means 82 thus taking the strain, piston extension 26 can fully lowered, and coupling means 80 repositioned, to permit interconnection of chain runs 12b, 12e at a different relative position, with a smaller chain loop around the jacking means 28. Re-pumping of handle 30 will cause piston extension 26 again to start to rise, lifting chain runs 12b, 12e, and further lifting trunk 10, and allowing locking means 82 to be removed. This procedure is repeated as many times as necessary, consistent with the space available below support table 20.

The chain loop formed by coupling means 80 balances the load to either side of the jacking means 28.

Because chain 12 is led through jack head 22, no height is required above jack head 22 other than the normal "lift-height". Because chain 12 is guided to either side of jacking means 28, the lifting appliance can be positioned and operated in a confined space, sufficient only for feet 70 and for the user to stand to operate handle 30.

As a safety feature, legs 54 are connected by strap 90, passing through apertures 91 in upstanding plates 92 on each of the legs. Strap 90, which in this embodiment is also a chain, is removable upon disconnection of releasable coupling 94. Thus in use strap 90 acts as a safety means, limiting the permitted angular separation of the legs 54.

A particular feature of my design is that before and after use the lifting appliance can be disassembled into a number of separate components and packed into a small space, suitable for transportation in a car boot or equivalent, and generally being of light weight and portable. Thus upon release of coupling means 80 from chain runs 12b,12e, the chain 12 can be withdrawn from guide members 18, 24 and jack head 22. Thereafter, jacking means 28 can be removed (lifted) from support table 20. Legs 54 can be de-coupled from connecting members 62; and upon release of the R-clips from the upper and forward apertures of brackets 52, legs 54 can be re-positioned into substantially parallel array, perhaps with the R-clips now in the upper and lower apertures. Guide posts 64 are hollow, with an internal dimension to receive legs 54, and are of a size suitable for carrying underneath the arm or on a wheeled truck.

Thus I have found a suitable material for the unit to be 3/16" mild steel plate, typically of section 2"x2". Members 40, 42 are of length 9"; struts 44,46 are of length 7"; and retaining tube 36 is of length 6", so that the overall dimension of support table 20 is 9"x15". Guide posts 64 are of length 29"; and jack head 22 is of length 6". Preferably the underside of jackhead 22 is strengthened with a 0.5" steel plate, to resist bending or shearing by chain runs 12c,12d.

Tube of dimension 1.5"x1.5"x3/16" is used for legs 54 (29" long); and for guide member mounting part 34 (4" long) and guide part 32 (3" long). Ledges 48, 50 are of 4"x9"x0.5"

For holes 56, I have found it convenient to make the upper hole of diameter 0.5", and the lower and forward holes of diameter 9/16"; since I propose the use of 0.5" steel shear pins, the clearance in each forward hole permits if necessary a link to be inserted in or removed from chain 90 during assembly, in particular so that chain 90 takes the (spreading) strain from legs 54. Furthermore, if the lifting appliance is overloaded, so that legs 54 bend or a chain link e.g. 94 extends, the shear pin can no longer easily be turned in the forward hole, and this provides a simple operator safe-loading check.

In the preferred embodiment, there are also a number of safety features. Chain 12 is confined by tubular jack head 22 and by tubular guide members 18,24, such that chain runs 12c,12d are unlikely to be of a length to engage the operator or a bystander should either of chain runs 12c,12d break (as by failure of a link) under load. Secondly, should either of the chain runs 12b,12e break under load, and tend to whip upwards, their impact is likely to be taken by table 20. Thirdly, as mentioned above the legs 54 are of length 29", and in this embodiment each plate 92 is positioned 4" from the leg lower end, so that if after chain breakage under load the runs 12b,12e tend to whip sideways rather than upwards, they are likely to be entrapped by strap 90. Fourthly, strap 90 is of chain links passing closely through the apertures 91 in the upstanding plates 92, so that if (alternatively) the strap 90 breaks, the individual strap 90 lengths are held by the respective plate 92 i.e. in the aperture; as an additional safety feature, should the strap 90 itself break and to provide the strap with extra strength to withstand the whiplash of a broken chain run 12b,12e, the strap 90 can be wound with a high tensile flexible nylon cord or steel wire, or if the strap 90 is of chain the nylon cord (or steel wire) can be led through the individual links. Fifthly, handle 30 is of a shape to be operated by an extension tube, so that the operator can stand further away if there is one orientation of the lifting appliance allowing more operator standing space.

The lower hole 56 is of the larger size so that the legs 54 can fit closely together during initial assembly, and subsequently when in the dis-assembled (portable) condition (when the shear pin will have been transferred from the forward hole to the lower hole); the shear pin in the upper hole is not usually removed.

The spacing between brackets 52 is 33/16", and these are set on the shelves 48,50 at 45 degrees.

In an alternative embodiment the jacking means can be wholly mechanical, rather than being an hydraulic jack. The legs 54 can be arranged to engage directly into the body of the jacking means, and in one such embodiment the table 20 is welded to the jacking means 28.

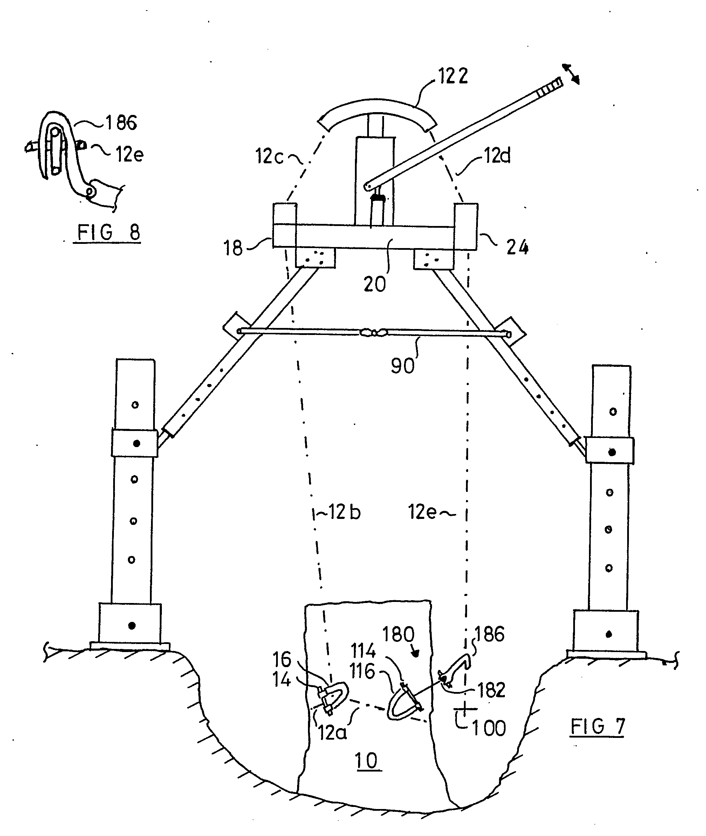

In the embodiment of Fig. 7, hollow jack head 122 has a return bend, and is preferably of part-circular shape.

In this embodiment coupling means 180 extends between chain runs 12a and 12e. Generally therefore coupling means 182 is alongside tree trunk 10 rather than above it.

Although (as in my Fig.1 embodiment) coupling means 180 can have a grab hook 186 at both ends of an intermediate flexible chain 182, and thus be releasable from both chain run 12a and chain run 12e, as shown in Fig.7 I prefer one end of coupling means 180 to be fitted with a shackle 116 of a size to permit chain run 12a to slide therethrough, the shackle being closed by a removable threaded crosspiece 114. In an alternative but less preferred embodiment the crosspiece 114 of shackle 116 is located in a selected link of chain run 12a. An advantage of my preferred arrangements is that the coupling means is located on chain 12 i.e. there are fewer separate (loose) parts. An additional advantage of my preferred arrangement is that the shackle 116 and thus coupling means 180 can more easily be correctly positioned along chain run 12a for effective lifting of tree trunk 10 by jacking means 28.

Grab hook 186 will normally engage between adjacent links of chain run 12e, as seen in Fig.8, rather than into a link.

Advantages of the modified positioning of coupling means 180 are {a} that the load to lift tree trunk 10 is not at first only taken by that part of chain run 12b between shackle 16 and the coupling means 80 (Fig.1) i.e. the load in this embodiment is shared by chain runs 12b,12e at chain run 12a and not at the coupling means 80; and {b} the chain run 12e at least is likely to be more nearly vertical, with a lower sideways force component on guide member 24.

A further modification shown on Fig.7 is the provision of abutment pin 100 securely connected (as by welding) to the free end of chain 12, usefully to the last link of chain run 12e. Abutment pin 100 is of a length so that it cannot pass through second hollow guide member 24. If for any reason therefore chain run 12e is pulled upwards (as seen in Fig.7), chain run 12e is not allowed to freewheel through guide member 24 and therefore probably also through guide member 18, which could be dangerous to an operator. It will be further understood that in consequence guide member 24 will (normally) be retained on chain 12, so reducing the number of loose parts to be re-assembled for use.

A third modification is the provision of the re-shaped jack head 122, with a return bend. Jack head 122 is of a forged metal tube, adapted to guide chain 12 close to the jacking means 28, with a smaller cantilever load on the side arms of the jack head which are therefore less likely to be distorted by the lifting loads. In a typical example I propose a return bend having a 10.16cm (4") lateral gap between its ends, sufficient to accommodate jacking means 28, the return bend being of 0.06cm thick material; in an alternative embodiment, for smaller loads, I propose a return bend of 3.8cm (1.5") lateral gap, again of material thickness 0.06cm..

The modified arrangement of Fig.7 will be particularly useful for lifting the heavier loads, such as large masonry blocks, and the larger sizes of manhole cover, as well as for pulling up tree trunks. The embodiment of Fig.1 can however be particularly useful for lifting those loads where subsequent access to the load during the lift i.e. once the chain run 12a has been fitted, is restricted, for instance when there is a need to bring up equipment or apparatus from the bottom of a well in a number of jacking stages, since the coupling means 80 (Fig.1) is positioned above the well top i.e immediately below table 20, rather than being down in the well adjacent the equipment to be lifted.

I can provide fittings (plates 92) for more than one strap (chain) 90.

It is an advantage of the described embodiments of my invention that I have found that tree stumps of 12" diameter can easily be lifted from the ground together with their roots; though if for instance a root is trapped directly below a guide post 64 it may be broken off by the force of the lift, with part of the root being left in the ground. I have also lifted fencing posts set in earth, but not as yet those set in concrete since these may not apparently move or lift even when a large lifting force is applied, but may then release suddenly and perhaps dangerously.

In an alternative application, my lifting appliance can be used to lift small trees, together with the majority of their roots and encasing soil, for replanting elsewhere, and then for instance the chain 12 will usually have run 12a covered to prevent "barking" of the tree, or run 12a will be replaced by a flexible strap for the same purpose; and the lifting appliance will be "off-set" so that the table 20 (and strap 90) is to one side of the tree, with an angled lift.

## Claims

1. A lifting appliance comprising upwardly extendable jacking means (28), at least three legs (54) adapted to support and position the jacking means substantially above an object (10) to be lifted, attachment means (12) adapted for secure attachment to the object to be lifted, the attachment means being flexible and substantially non-extensible, the attachment means being located to opposed sides of the jacking means and being operatively connectable thereto whereby the attachment means can be tensioned to lift the object upon upward extension of the jacking means.

2. A lifting appliance according to Claim 1 characterised in that the jacking means is removably located on a support table (20), which in turn is mounted on four equi-spaced legs (54), and in that safety means (90) limits the permitted angular separation of the legs.

3. A lifting appliance according to Claim 2 characterised in that the legs (54) are individually adjustable, to permit the support table (20) to be substantially horizontal in use.

4. A lifting appliance according to Claim 3 characterised in that the legs are telescopic.

5. A lifting appliance according to Claim 1 characterised in that the attachment means is formed as a sling chain (12), and in that there are hollow guide members (18,24) positioned to either side of the jacking means (28), and in that the jacking means includes a movable jack piston and hollow jack head (22), with chain runs passing through the apertures in the said hollow guide members and through the said hollow jack head, the hollow jack head being mounted on an extension (26) of the jack piston and so movable upwards and downwards with the jack piston.

6. A lifting appliance according to Claim 5 characterised by locking means (83) which can hold the attachment means, and thus a partly-lifted object, by way of an end surface e.g. an upper surface, of a (chain-run) guide member (18) and further characterised by coupling means (82) interconnecting chain runs (12a,12b,12e) to either side of and below the jacking means, to form a closed loop around the jacking means.

7. A lifting appliance according to Claim 5 characterised in that the coupling means interconnects a chain run (12a) connected to a shackle and encircling the object to be lifted and a free chain run (12e) at an end of the sling chain remote from the shackle, and further characterised in that the jack head (122) includes a return bend.

8. A lifting appliance according to Claim 1 characterised by separable parts (12,20,54,64,18,24,82,83,90), said parts being portable.

9. A method of operating a lifting appliance according to any preceding claim, which includes a locking means for the attachment means, characterised by holding the attachment means whilst the jacking means is re-set, to provide a multi-stage lift for the object to be lifted.

10. A method of operating a lifting appliance according to claim 9 having jacking means including a jack head characterised by using a sling chain as the attachment means, forming the sling chain with a chain closed loop, and using the locking means to hold the chain closed loop whilst re-setting the jacking means by returning the jack head to a lower position, and whilst re-positioning the coupling means ready for the next lifting stage.

FIG 1

FIG 1a

FIG 2

FIG 3

FIG 4

FIG 5

FIG 6

FIG 8

FIG 7